# EUROPÄISCHE PATENTSCHRIFT

(11) **EP 1 843 148 B1**
(45) Veröffentlichungstag und Bekanntmachung des Hinweises auf die Patenterteilung: **31.08.2022**
(21) Anmeldenummer: 06007461.4
(22) Anmeldetag: 08.04.2006
(51) Int. Cl.: G01N 21/86, G06T 7/00

(54) **ANALYSE OPTISCHER DATEN MIT HILFE VON HISTOGRAMMEN**
ANALYSIS OF OPTICAL DATA USING HISTOGRAMS
ANALYSE DE DONNÉES OPTIQUES À L'AIDE D'HISTOGRAMMES

(43) Veröffentlichungstag der Anmeldung: 10.10.2007
(60) Teilanmeldung: 10008491.2
(73) Patentinhaber: Roche Diabetes Care GmbH, 68305 Mannheim (DE); F. Hoffmann-La Roche AG, 4070 Basel (CH)
(72) Erfinder: PETRICH, Wolfgang, 7669 Bad Schönborn (DE); HAAR, Hans-Peter, 69168 Wiesloch (DE); ASFOUR, Jean-Michel, 69469 Weinheim (DE); KOCHERSCHEIDT, Gerrit, 69126 Heidelberg (DE)

(56) Entgegenhaltungen:
- EP-A- 1 359 409
- US-A1- 2003 185 707
- US-A1- 2005 037 510
- US-A1- 2005 115 873

## Beschreibung

### Technisches Gebiet der Erfindung

Die Erfindung liegt im Gebiet der optischen Analyse von kleinen Probevolumina, wie sie beispielsweise bei der Diagnostik von Blutproben auftreten.

Die Konzentrationsbestimmung verschiedener Analyten in physiologischen Proben ist von wachsender Bedeutung in unserer Gesellschaft. Die Untersuchung solcher Proben findet in verschiedenen Anwendungsbereichen statt, z. B. in klinischen Labors oder im "Home-Monitoring". Hierzu zählt vor allem auch die Glukosemessung beim Diabetes Management sowie die Cholesterinmessung bei Herz- und Gefäßkrankheiten. Die medizinische Blutdiagnostik setzt stets die Gewinnung einer Blutprobe des zu untersuchenden Individuums voraus.

Die nach dem Stechvorgang durchgeführte Analytik wird häufig in einem kleinen, tragbaren Messgerät, einem so genannten "Handheld device" durchgeführt, in dem mit Blut benetzte Testelemente analysiert werden. Eine große Bedeutung haben diese Handheld devices zum Beispiel in der Diagnostik von Diabetes Erkrankungen. Die Messung in diesen Geräten wird vor allem elektrochemisch oder optisch durchgeführt. Bei den optisch basierten Messungen, wird die Probe mit Licht beleuchtet und das reflektierte Licht detektiert, um die Analytkonzentration zu bestimmen. Hierzu werden vor allem Testelemente wie Teststreifen verwendet, die mit der Probe, wie Blut oder interstitielle Flüssigkeit benetzt werden. Die Probe reagiert anschließend mit den Reagenzien, die auf diesem Testelement aufgebracht sind. Dies kann zu einer Farbänderung führen, die anschließend detektiert werden kann.

Bei der Benutzung herkömmlicher Verfahren zur Analyse der Testelemente ist es von großer Bedeutung, dass der Nachweisbereich des Testelementes gleichmäßig von der Testflüssigkeit benetzt ist. Die ungleichförmige oder unzureichende Benetzung des Nachweisbereiches kann zu fehlerhaften Ergebnissen führen. Besonders wenn eine geringe Menge von Testflüssigkeit benutzt wird, könnte die Verteilung auf dem Testelement nicht gleichförmig sein und nur ein Teil des Nachweisbereiches ist mit Probenmaterial benetzt. In den herkömmlichen optisch basierten Messmethoden wird häufig das reflektierte Licht vom gesamten Nachweisbereich vermessen, was zu einer hohen Ungenauigkeit der gemessenen Glucose führt, da je nach applizierter Probenmenge unterschiedlich viel unbenetzte Fläche in die Bestimmung mit eingeht. Bei unzureichender Benetzung des Nachweisbereiches kann so die notwendige Größe des zu vermessenden Ausschnitts für eine fehlerfreie Messung unterschritten werden. Dies kann für den Patienten entweder eine Wiederholung der Messung notwendig machen oder es werden falsche Messwerte generiert.

Versuche, der unzureichenden oder ungleichförmigen Benetzung des Testelements abzuhelfen, haben bisher nicht zu einer befriedigenden Lösung geführt. Im einfachsten Fall ist der Patient gezwungen, visuell die Benetzung des Testelements zu verifizieren. Dies ist vor allem bei Diabetikern, die häufig schon eine verminderte Sicht haben, nicht gut möglich.

In der Patentschrift US 6249593 wird ein immunologischer Nachweis eines Analyten beschrieben. Dabei wird ein Fängermolekül auf einen Teil des Testfeldes immobilisiert und bindet den Analyten, der wiederum durch ein Markermolekül optisch sichtbar gemacht wird. Während der Beleuchtung des Nachweisbereiches werden ortsaufgelöst Messwerte erzeugt, wobei der Ort mit höchster Strahlungsintensität ausgesucht wird der allein zur Auswertung herangezogen wird. Dieser Wert wird mit einem benetzten Teil des Testfeldes referenziert, der kein Fängermolekül enthält. Nachteil dieser Methode ist die Notwendigkeit der Benetzung sowohl der Testfeldbereiche mit Fängermolekül als auch ohne. Hierdurch ist eine örtlich gezielte Aufgabe der Probe notwendig sowie eine Probemenge nötig, die immer beide Bereiche benetzt. Außerdem erfolgt die Bestimmung des Analyten auf Basis eines einzelnen Messwertes. Dies kann zu großen Fehlern führen, da mögliche Inhomogenitäten oder Verunreinigungen auf dem Testelement nicht berücksichtigt werden können.

Auch in der Patentanmeldung US 2003/0153023 wird ein Fängermolekül auf der Testfeldoberfläche immobilisiert und eine Reaktion mit dem Analyten optisch detektiert. Hier wird die Häufigkeit von Lichtintensitäten an verschiedenen Orten bestimmt. Es wird ein Schwellenwert festgelegt, der nur Messwerte zur Auswertung berücksichtigt, die oberhalb einer bestimmten Intensität liegen. Hierdurch können Signale vom nicht reagierten Hintergrund von Nutzsignalen unterschieden werden. Da auch hier eine immunologische Reaktion stattfindet, die unspezifisch gebundene Markermolekülen berücksichtigen muss, ist die Applikation von Probe sowohl auf Areale mit Fängermolekülen sowie auf Areale ohne Fängermoleküle notwendig.

US 6847451: Die Patentanmeldung US 6847451 beschreibt ein Verfahren zur optischen Bestimmung eines Analyten in einer Flüssigkeit auf einem Testfeld. Dabei reagiert der Analyt mit einem Enzym auf dem Testfeld und es wird ein Farbstoff gebildet, der optisch detektiert wird. In diesem Patent wird das Problem gelöst, dass eine zu kleine Probemenge nicht das ganze Testfeld benetzt und bei integraler Auswertung zu falschen Ergebnissen führt. Dies wird durch eine ortsaufgelöste Messung vermieden, bei der nur noch Testbereiche ausgewertet werden deren Intensität einen Schwellenwert überschreitet. Ein Nachteil dieser Methode ist die Integration über einen großen Bereich des Testfeldes, der in sich inhomogen sein kann. Da auch kleine Konzentrationen vermessen werden sollen, darf der Schwellenwert nicht zu niedrig gesetzt werden. Ansonsten können Flüssigkeiten mit kleinen Analytkonzentrationen nicht mehr erfasst werden. Die Auswertung von sämtlich benetzten Feldern führt so auch zu ungenauen Ergebnissen. Diese Ungenauigkeit rührt bei teilbenetzten Testelementen vom Rand des benetzten Bereiches. In diesem "Randbereich" findet man häufig eine ungleichmäßige Verteilung von Probe und damit von Analyt an. Wird dieser Bereich mit ausgewertet, wie dies im Stand der Technik gemacht wird, erhält man ein verfälschtes Ergebnis. Dies ist besonders kritisch, wenn die benetzte Fläche sehr klein wird und der Randbereich einen großen Anteil des benetzten Bereiches ausmacht.

Aus den Nachteilen des Standes der Technik ergibt sich die Aufgabe ein System zu entwickeln, das eine einfachere und genauere Analytik gewährleistet.

### Allgemeine Beschreibung

Erfindungsgemäß wird ein System zur Bestimmung der Konzentration eines Analyten in einer Flüssigkeit beschrieben, mit einer Beleuchtungs- bzw. Detektionseinheit zur Detektion von Lichtintensitäten die von Teilbereichen eines Nachweisbereiches eines Testelementes abgestrahlt werden. Weiterhin wird eine Auswerteeinheit beschrieben, die für die detektierten Lichtintensitäten eine Häufigkeitsverteilung ermittelt, wobei die Häufigkeitsverteilung mindestens ein erstes Maximum, hervorgerufen durch unbenetzte Teilbereiche oder mindestens einem Referenzbereich und ein zweites Maximum, hervorgerufen durch benetzte Teilbereiche aufweist, und welche aufgrund von Häufigkeiten benetzte Bereiche identifiziert und von unbenetzten Bereichen unterscheidet und auf Basis der Häufigkeitsverteilung mindestens eine Lichtintensität auswählt und aus der mindestens einen ausgewählten Lichtintensität die Konzentration des Analyt mit kleinen Probevolumina ermittelt. Durch die Berücksichtigung von Häufigkeiten von Intensitäten ist es möglich, homogen benetzte Bereiche zu identifizieren und auszuwerten, die wenig von Nebeneffekten, wie inhomogene Reagenz- und/oder Probeverteilung, variierende Viskositätseigenschaften der applizierten Flüssigkeit oder Verunreinigungen der Probe und/oder des Testelementes beeinflusst sind. Auf diese Weise können Ergebnisse erzielt werden, bei denen Messfehler, die auf Eigenschaften des Testelementes und der Flüssigkeit zurückzuführen sind, nahezu ausgeschlossen sind.

Als Flüssigkeiten (auch als Probe oder Probeflüssigkeit bezeichnet) sind vor allem physiologische Flüssigkeiten wie Blut (venös oder kapillar), Blutbestandteile, interstitielle Flüssigkeit, Plasma, Serum, Urin oder Speichel zu verstehen, aber nicht darauf eingeschränkt. Im weiteren Text wird vor allem von Blut als Probe gesprochen. Dies ist exemplarisch für den Begriff der Flüssigkeit zu sehen und nicht einschränkend zu verstehen.

Blutproben werden vor allem bei Selbsttests des Patienten benötigt, der regelmäßig einen Blutparameter untersuchen muss, wie beispielsweise bei Diabetikern. Um dem Patienten möglichst wenig Schmerz beim Stechen zu bereiten, wird die Einstichtiefe möglichst niedrig gewählt. Dabei wird nur wenig Blut gewonnen. Aus diesem Grund müssen die Analysemethoden immer kleinere Blutvolumina präzise vermessen können. Das erfindungsgemäße System ist deshalb sogar für die Analyse von Probevolumina unterhalb von 100 nl geeignet. Ein bevorzugter Volumenbereich liegt zwischen 1 bis 500 nl, ein besonders bevorzugter Volumenbereich liegt zwischen 10 und 100 nl. Es können jedoch auch größere Volumina vermessen werden. Besonders bei Instrumenten, die eine automatisierte Probenahme nach dem Einstich beinhalten, kann die zu analysierende Probemenge noch unterhalb von 1 nl liegen. Aus diesem Grund wird ein System beschrieben, das ermöglicht, sehr kleine Probevolumina unabhängig von ihrer applizierten Form zu analysieren. Dies geschieht mit Hilfe von Häufigkeitsbestimmungen von Lichtintensitäten der reagierten Bereiche auf dem Nachweisbereich in Form eines Histogramms.

Zur Veranschaulichung des Prinzips der Auswertung von Häufigkeiten, kann ein Histogramm herangezogen werden. Hierbei werden die Lichtintensitäten z.B. in Form von Grauwerten bestimmt und in Intensitätsintervalle eingeordnet. Die Häufigkeit der jeweiligen Lichtintensität in einem Intensitätsintervall wird gegen den Grauwert aufgetragen. Hierzu wird eine Detektionseinheit oder eine Bestrahlungseinheit benötigt, die ortsaufgelöst den Nachweisbereich detektiert oder bestrahlt. Es wird eine Mehrzahl von Teilbereichen auf dem Nachweisbereich untersucht, wobei die Ortsinformation bei der weiteren Auswertung nicht mit verwendet werden muss. Diese Teilbereiche sind keine realen Unterteilungen des Nachweisbereiches, sondern entstehen durch die optische, ortsaufgelöste Vermessung des Nachweisbereiches. Die Anzahl dieser Teilbereiche hängt somit von der Anzahl der bestrahlten bzw. detektierten Areale ab. Je mehr Teilbereiche untersucht werden, desto genauer kann die Unterscheidung von Intensitätsunterschieden verschiedener Bereiche ermittelt werden. Die Intensitäten der benetzten Teilbereiche korrelieren mit der Konzentration des Analyten der Probe. In einer bevorzugten Ausführungsform werden 256 Intensitäten unterschieden. Diese Anzahl an Intensitätsstufen ist ausreichend, um eine ausreichende Präzision / Auflösung zur Bestimmung der Konzentration des Analyten zu erreichen. Dabei kann die Datenmenge in einem so geringen Umfang gehalten werden, dass sie mittels kleiner Datenträger, die entweder in einer Auswerteeinheit im Detektor selbst oder in einer Auswerteeinheit getrennt vom Detektor, zu verarbeiten ist. Im Unterschied zu Systemen aus dem Stand der Technik, die zur Auswertung der ortsaufgelösten Messungen sämtliche Intensitätswerte weiterverarbeiten, werden in dem erfindungsgemäßen System zur Berechnung der Konzentration des Analyten bevorzugter weise nur bestimmte Häufigkeiten und die damit verknüpften Intensitäten benutzt. Besonders bei zeitaufgelösten Messungen, bei denen eine hohe Taktrate der Bildaufnahme nötig ist, weist die erfindungsgemäße Auswertung ohne Abspeicherung der kompletten Bilddaten eine deutliche Erniedrigung des Strombedarfs und des Speicherbedarfs auf. Auf diese Weise kann ein Gerät, das aufgrund der Auswertemethode einen niedrigen Speicherbedarf hat mit günstigen Bauelementen hergestellt werden. Das Gerät kann demnach kostengünstiger hergestellt und betrieben werden als herkömmliche Geräte.

Vor der Benetzung eines Testelements kann die Häufigkeitsverteilung der Intensitäten auf dem Nachweisbereich bestimmt werden. Die Teilbereiche des Nachweisbereiches weisen sehr ähnliche Intensitäten bzw. die daraus ermittelten Grauwerte auf. Alternativ können Intensitäten von Teilbereichen vor oder nach Aufgabe der Probe bestimmt werden, die von einem Referenzbereich detektiert werden. Dieser Referenzbereich kann Teil des Nachweisbereiches sein oder außerhalb des Nachweisbereiches liegen. In bzw. auf diesem Referenzbereich findet keine Reaktion statt, unabhängig ob der Referenzbereich von Probe benetzt wird oder nicht.

Im Histogramm sind die unbenetzten Teilbereiche oder der Referenzbereich durch ein erstes Maximum zu erkennen, das eine schmale Verteilung von Intensitäten bzw. Graustufen um das Maximum aufweist. Ein Maximum der Häufigkeiten ist dadurch gekennzeichnet, dass die Kurve, die die Häufigkeiten wiedergibt an dem Punkt des Maximums eine Steigung von Null aufweist. Ein unbenutztes Testelement, weist auf seinem Nachweisbereich idealer weise Intensitäten in einem kleinen Intensitätsbereich auf. Ist dies der Fall, kann davon ausgegangen werden, dass auf dem Nachweisbereich nur wenige bis keine Störstellen anzufinden sind. Dies ist die Voraussetzung für eine fehlerlose Messung einer Probe. Liegt eine signifikante Anzahl von Intensitäten außerhalb dieses kleinen "normalen" Intensitätsintervalls, so ist davon auszugehen, dass keine fehlerlose Messung mit diesem Testelement möglich ist. Dies kann als Qualitätskontrolle herangezogen werden, um fehlerhafte Testelemente von der Messung auszuschließen.

Bei Aufgabe beispielsweise eines Tropfens der Probe auf den Nachweisbereich findet eine Veränderung der Häufigkeitsverteilung der Intensitäten statt. Dies ist unabhängig von der Wellenlänge, mit der der Nachweisbereich bestrahlt wird. So kann Licht im Infrarot-Bereich, im sichtbaren wie im UV-Bereich verwendet werden. Auch eine Fluoreszenzmessung ist mit diesem Verfahren möglich. Repräsentativ wird eine Methode beschrieben in der bei einer Wellenlänge von 660 nm das Testelement bestrahlt oder detektiert wird. In diesem Fall befindet sich ein Reagenz in oder auf dem Nachweisbereich, der möglichst homogen verteilt ist und eine Reaktion mit dem Analyten vollzieht, wobei ein Farbstoff freigesetzt wird, welcher bei 660 nm Licht absorbiert. Befindet sich Analyt in der Probenflüssigkeit, so verdunkelt sich an den benetzten Stellen des Nachweisbereiches das Testelement in den detektierten Wellenlängenbereich. Dies bedeutet eine Intensitätsverminderung in den benetzten Teilbereichen. Bei einer homogenen Verteilung des Reagenz auf dem Nachweisbereich gibt es eine entsprechende Anzahl von Testfeldern, die eine ähnliche Intensität aufweisen. Im Histogramm ist eine Umverteilung von Häufigkeiten der Intensitäten, bedingt durch die Verfärbung des Nachweisbereiches, zu erkennen. Dabei findet eine Anhäufung von Grauwerten bei einer niedrigeren Intensität statt. Im Histogramm ist ein zweites Maximum zu erkennen, das von den benetzten Teilbereichen herrührt. Wenn der Nachweisbereich vollständig benetzt wird, werden alle Grauwerte des ersten Maximums zu einem anderen Grauwert verschoben. Je homogener das Reagenz bzw. die Probe verteilt sind, desto schmaler ist die Verteilung um den mittleren Intensitätswert der verschobenen Intensitätswerte der benetzten Bereiche.

Diese Verteilung der Intensitätshäufigkeiten vor und nach Aufgabe der Probe auf den Nachweisbereich kann zur Bestimmung des Analyten herangezogen werden. In einer bevorzugten Ausführungsform werden die Intensitätsunterschiede der Maximalwerte in der Häufigkeitsverteilung vor und nach Benetzung des Nachweisbereiches zur Konzentrationsbestimmung des Analyten herangezogen. Eine weiter bevorzugte Ausführungsform ist die Auswertung auf Basis der Geschwindigkeiten der Veränderung der Häufigkeiten der abgestrahlten Lichtintensitäten nach Benetzung des Nachweisbereiches. Vor allem für die zeitliche Betrachtung der Veränderung der Häufigkeiten, aber auch für die anderen Auswerteverfahren, kann eine multivariate Analyse erfolgen.

Eine weiter bevorzugte Ausführungsform zur Bestimmung der Analytkonzentration ist die Bestimmung der Steigung des Intensitätsverlaufes zwischen der niedrigsten Intensität und der häufigsten Intensität des benetzten Bereiches. Dabei kann beispielsweise die Intensität zur Bestimmung des Analyten herangezogen werden, die die größte Häufigkeit eines Intensitätsintervalls bzw. Grauwertes aufweist.

Eine weitere bevorzugte Ausführungsform zur Ermittlung der Konzentration des Analyten kann auf Basis von Intensitäten, die einen Häufigkeits-Schwellenwert überschreiten, durchgeführt werden. Mit diesem Häufigkeits-Schwellenwert wird sichergestellt, dass der Bereich zur Auswertung herangezogen wird, der die homogenste Verfärbung der benetzten Fläche aufweist.

Des Weiteren weist das System eine Möglichkeit zur Qualitätskontrolle aufgrund der Häufigkeitsverteilung auf. Wie bereits erwähnt, ist die Verteilung der Intensitäten bei idealer Verteilung des Reagenz auf dem Testelement gering. Je breiter diese Intensitätsverteilung ist, desto inhomogener hat die Reaktion stattgefunden. Die Inhomogenität der Reaktion ist sowohl abhängig von der Verteilung des Reagenz im oder auf dem Nachweisbereich, wie auch von der Ausbreitung des Tropfens auf dem Nachweisbereich. Je nach Viskosität und Bestandteilsverteilung des Blutes, kann dieser Tropfen auf dem Nachweisbereich einen unterschiedlich großen Randbereich aufweisen. Die Reaktion des Blutes in diesem Randbereich mit den Reagenzien im oder auf dem Nachweisbereich kann sich anders als im Zentrum des Probetropfens verhalten.

Erfindungsgemäß wird ebenfalls ein Verfahren zur Bestimmung der Konzentration eines Analyten in einer Flüssigkeit beschrieben. Hierzu wird eine Intensitäts-Häufigkeit des unbenetzten Nachweisbereiches des Testelementes bestimmt. Dies kann vor Aufbringen eines Probetropfens oder danach geschehen, je nachdem ob der Nachweisbereich komplett benetzt wird oder nicht. Weiterhin beinhaltet das Verfahren die Detektion von Lichtintensitäten des von mindestens einem Teilbereich des Nachweisbereiches abgestrahlten Lichtes. Diese Lichtintensitäten werden auf Basis ihrer Häufigkeiten wie oben beschrieben ausgewertet.

Die Auswertung von Lichtintensitäten mittels Histogramm kann in verschiedenen Systemen eingesetzt werden, bei denen sich aufgrund der Anwesenheit eines Analyten Lichtintensitäten ändern. Ein Beispiel für solch ein System ist die Bestimmung von Glucose in einer biologischen Probe, wie beispielsweise Blut, Plasma, Serum oder interstitielle Flüssigkeit. Mit Hilfe dieser Auswerteverfahren können Probevolumina zwischen 1 und 500 nl vermessen werden. Ein bevorzugter Bereich liegt zwischen 10 und 100 nl und ein besonders bevorzugter Bereich liegt zwischen 10 und 50 nl.

Weiterhin wird ein Instrument beschrieben, das eine Detektionseinheit zur Detektion von Lichtintensitäten die von Teilbereichen eines Nachweisbereiches eines Testelements abgestrahlt werden sowie eine Auswerteeinheit, die auf Basis von Häufigkeiten von Lichtintensitäten des von den Teilbereichen abgestrahlten Lichtes die Konzentration des Analyt ermittelt, wobei die Detektionseinheit einen CMOS-Detektor enthalten kann, dessen Pixel mit mindestens einem A/D-Wandler verbunden ist. Weiterhin kann die Auswerteeinheit mit einer Anzeigeeinheit verbunden sein, bzw. die Anzeigeeinheit kann in die Auswerteeinheit integriert sein. In einem bevorzugten Instrument sind Detektionseinheit und Auswerteeinheit auf einem Chip integriert. Dies bietet den Vorteil, dass das Instrument stark integriert und damit Platz sparend aufgebaut werden kann. Da der Speicherbedarf aufgrund der reduzierten Datenmenge für die Auswertung sehr klein ist, ist zudem der Strombedarf eines solchen integrierten Elements deutlich niedriger als bei herkömmlichen Instrumenten.

In üblichen Geräten zur Bestimmung eines Blutparameters, können Testelemente eingesetzt werden, wie sie aus den Dokumenten EP-A 0 885 591, EP-B 0 535 480 und EP-B 0 477 322 bekannt sind. Das Testelement enthält einen Nachweisbereich. Dieser Nachweisbereich enthält vorzugsweise alle für die Nachweisreaktion des Zielananlyten in der Probe notwendigen Reagenzien und gegebenenfalls Hilfsstoffe. Das Nachweiselement kann auch nur Teile oder gar keine der Reagenzien oder Hilfsstoffe enthalten. Dem mit der Technik von analytischen Testelementen oder diagnostischen Testträgern vertrauten Fachmann sind solche Reagenzien und Hilfsmittel bestens bekannt, wie sie z. B. in den Dokumenten EP-A 0 885 591, EP-B 0 535 480 und EP-B 0 477 322 beschrieben sind. Für Analyten, die enzymatisch nachzuweisen sind, können beispielsweise Enzyme, Enzymsubstrate, Indikatoren, Puffersalze, inerte Füllstoffe und dergleichen mehr im Nachweiselement enthalten sein. Das Nachweiselement kann aus einer oder mehreren Schichten aufgebaut sein und gegebenenfalls einen inerten Träger, bevorzugt auf der Seite des Testelements, die nicht mit der Probe in Kontakt gebracht wird, enthalten. Für den besonders bevorzugten Fall, dass die Nachweisreaktion zu einer beobachtbaren Farbveränderung führt (die auch außerhalb des sichtbaren Bereichs liegen kann), worunter in diesem Zusammenhang entweder die Änderung einer Farbe, das Entstehen einer Farbe oder das Verschwinden von Farbe verstanden werden soll, ist sicherzustellen, dass der Träger durch geeignete Maßnahmen eine visuelle oder optische Beobachtung der Nachweisreaktion zulässt. Dazu kann das Trägermaterial des Nachweiselements selbst durchsichtig sein, beispielsweise eine durchsichtige Kunststoff-Folie, wie beispielsweise Polycarbonatfolie, oder auf der Detektionsseite eine durchsichtige Aussparung besitzen. Bei der bevorzugten Reflektionsmessung können Testelemente verwendet werden, wie sie in der Patentanmeldung WO 99/29429 beschrieben sind. Diese enthalten eine Pigment-Schicht (vorzugsweise TiO₂) in der Nachweisschicht. Diese diffus streuende TiO₂-Schicht bewirkt eine Erhöhung der Reflektion des Lichtes was zu einer höheren Wechselwirkung des eingestrahlten Lichtes mit den Reagenzien führt. Dadurch kann eine Verstärkung des Messeffektes, wie beispielsweise die Absorption des Lichtes erreicht werden. In einer besonders bevorzugten Ausführungsform absorbiert der gebildete Farbstoff bevorzugt Licht bei einer Wellenlänge von 660 nm.

In einer weiteren bevorzugten Ausführungsform wird ein Testelement benutzt, das zur Analyse sehr kleiner Probevolumina dient. Dieses Testelement kann in einem System vorliegen, wobei die Probenapplikation durch das System erfolgt. Hierzu wird bevorzugter weise die Probe durch das System zum Testelement transportiert und die Applikation von einem Probensammelort auf das Testelement übertragen. Bei diesem Übertrag nimmt der Probetropfen auf dem Testelement eine bestimmte Form an solange eine ausreichende Probenmenge erreicht ist. Mit Hilfe der Histogrammauswertung kann dieser Probetropfen unabhängig von seiner Form ausgewertet werden.

Die Beleuchtung des Nachweisbereiches kann durch eine oder mehrere Lichtquellen geschehen. Dabei kann der Nachweisbereich homogen ausgeleuchtet sein oder nur in Teilbereichen. Bei der Verwendung von nur einer Lichtquelle kann eine homogene Ausleuchtung des Nachweisbereiches durch die Verwendung eines Milchglases oder anderer streuender Einheiten verbessert werden.

Eine Alternative zur Beleuchtung des Nachweisbereiches mit mindestens einer Lichtquelle, ist die Nutzung des Umgebungslichtes (Sonnenlicht oder künstliche Beleuchtung) zur Ausleuchtung des Nachweisbereiches. Da das Umgebungslicht multispektral ist, kann zur Detektion nur eines bestimmten Wellenlängenbereiches ein Filter zwischen Testelement und Detektor eingesetzt werden.

Alternativ kann das System zur sequentiellen Beleuchtung des Testelementes mit verschiedenen Beleuchtungseinheiten versehen sein. Dies ist jedoch nicht zwingend nötig. Als Lichtquelle kann beispielsweise eine einfache Laserdiode kombiniert mit einem Reflektor der durch Mikromechanik verstellbar ist, dienen. Mit Hilfe des Reflektors kann der Lichtstrahl das Testelement lückenlos abrastern. Alternativ kann ein Laser-Array eingesetzt werden, bevorzugt ein VCSEL-Array (Vertical Cavity Surface Emitting Laser). Jeder Laser im Array ist hierbei einzeln adressierbar. Die VCSEL bieten den Vorteil, dass das Licht mit geringer Strahldivergenz abgestrahlt wird. Diese Laserstrukturen weisen eine Strahldivergenz von etwa 5-8° auf. Auf diese Weise ist nicht nur eine kleine Fläche zu bestrahlen, zusätzlich ist die Lichtmenge auf dieser Fläche sehr hoch. Eine weitere Möglichkeit ist ein Laserdioden-Array. Hierbei kann entweder das Licht in einen Bildleiter eingekoppelt werden, der das Anregungslicht zu dem Testelement führt oder das Licht wird mittels eines Mikrolinsenarrays, das zwischen dem LED Array und dem Testelement angeordnet ist, auf die verschiedenen Bereiche des Testelements fokussiert. Als weitere Beleuchtungseinheit könnte auch ein OLED-Schachbrett (Organic Light Emmitting Diodes) dienen. Hierbei kann direkt benachbart eine Beleuchtungs-LED und ein Detektor angeordnet sein. Durch Anordnung mehrerer solcher Beleuchtungs-/Detektoreinheiten kann eine große Fläche flächig oder sequentiell ausgeleuchtet und die Reflektion detektiert werden. Da sowohl die Beleuchtung als auch die Detektion in ähnlichem Winkel zum Testelement angeordnet sind, eignet sich diese Anordnung bevorzugt für Fluoreszenzmessung, da hierbei das Anregungslicht und das vom Nachweisbereich emittierte Licht mittels Filter gut von einander zu trennen sind.

Die Beleuchtungseinheit kann aus einer monochromen oder multispektralen, kohärenten oder inkohärenten Strahlungsquelle bestehen. Die Strahlung aus der Beleuchtungseinheit dient dazu in den Nachweisbereich, auch als Probenort bezeichnet, einzudringen, um den Analyten direkt oder die Farbreaktion eines Reagenz mit dem Analyt zu messen. Vorzugsweise besteht die Beleuchtungseinheit aus einer oder mehreren LED's deren Licht am Probenort entweder für eine speziell gewählte räumliche Intensitätsverteilung oder für eine homogene Ausleuchtung sorgt. Um eine Tiefeninformation zu erhalten, kann die Beleuchtung fokussiert ausgelegt werden. Der Fokus wird dann in Richtung der Tiefendimension verschoben. Wahlweise kann die Anregung über ein multispektrales LED Array erfolgen. Auch die kohärente Anregung mit Laserdioden beispielsweise im blauen / ultravioletten Spektralbereich insbesondere in der Fluorimetrie ist denkbar. In einer bevorzugten Ausführungsform wird Licht mit einer Wellenlänge von ca. 660 nm benutzt. Dies kann durch die Wahl der Lichtquelle umgesetzt werden oder durch den Einbau von abbildenden Einheiten wie Filter, die nur für einen definierten Wellenlängenbereich lichtdurchlässig sind.

Zwischen der Beleuchtungseinheit und dem Nachweisbereich kann eine Abbildungseinheit eingebaut sein. Diese Abbildungseinheit besteht aus abbildenden optischen Elementen wie Linsen, Spiegeln, Blenden, Prismen, Lichtleitenden oder holographischen Elementen. Dadurch wird eine Beleuchtung des Nachweisbereichs gewährleistet. Eine weitere Abbildungseinheit dient zur Projektion des bestrahlten Probenkörpers auf die Detektionseinheit. Diese Abbildungseinheit besteht ebenfalls aus abbildenden optischen Elementen wie Linsen, Spiegeln, Prismen, Blenden, Lichtleitenden oder holographischen Elementen. Wahlweise kann ein mikrooptisches Linsenarray verwendet werden bei dem jedes Einzelelement abgegrenzte räumliche Bereiche des Testelements auf Einzelelemente der Detektionseinheit abbildet. Bei Verwendung einer multispektralen Lichtquelle ist es sinnvoll, einen Filter vor dem Detektor bzw. vor das Testelement anzubringen.

Detektionseinheiten, zur Verwendung in der vorliegenden Erfindung, können aus einem flächigen oder zeilenförmigen Element bestehen, das die orts- wie auch die zeitaufgelöste Messung der gestreuten Strahlung, die vom Nachweisbereich abgebildet wird, ermöglicht. Vorzugsweise handelt es sich bei diesem Element um ein zweidimensionales CMOS-Array, ein CCD Array oder ein zeilenförmiges Diodenarray, bei dem die ortsaufgelöste Abbildung des Nachweisbereiches mittels eines Scanvorganges durchgeführt wird. Häufig kann auch eine einfache Photodiode ohne Ortsauflösung hinreichend sein. Diese kann beispielsweise in Kombination mit einer ortsaufgelösten Bestrahlung des Nachweisbereiches benutzt werden.

Die Detektionseinheit wandelt die auf eine optisch sensitive Fläche des Detektors auftreffende Lichtmenge in ein elektrisches Signal um. Dieses elektrische Signal kann direkt an die Auswerteeinheit weiter geleitet werden und dort weiterverarbeitet werden. Bei einem ortsaufgelösten Detektor ist die optisch sensitive Fläche in Teilbereiche unterteilt, die auch als Pixel bezeichnet werden. Je größer die Anzahl der Pixel, desto kleinere Teilbereiche des detektierten Objektes können unterschieden werden. In einer bevorzugten Ausführungsform wird ein CMOS-Detektor eingesetzt, der mehr als 1 Million Pixel besitzen kann. Ein bevorzugter Bereich liegt zwischen 100 und 100.000 Pixel und ein besonders bevorzugter Bereich liegt zwischen 1000 und 10.000 Pixel. Diese Pixel sind bevorzugter weise in einer quadratischen oder rechteckigen Form angeordnet und bilden ein zweidimensionales Array. Das Array besteht aus mindestens einer Zeile und mindestens einer Spalte. Dabei können Zeilenzahl und Spaltenzahl von einander differieren. Je nach Geometrie des zu detektierenden Gegenstandes kann das Array auch eine runde oder ovale Form annehmen. Eine bevorzugte Anordnung der Pixel ist ein Array aus 256 mal 256 Pixeln.

In einer weiteren Ausführungsform kann an jedem Pixel zusätzlich ein A/D-Wandler angebracht sein. In einer bevorzugten Ausführungsform wird jede Zeile oder jede Spalte des Arrays mit einem A/D Wandlern verbunden. Auf diese Weise können die Signale spalten- bzw. zeilenweise ausgelesen werden. Weiterhin kann der CMOS-Detektor zusammen mit dem mindestens einen A/D-Wandler auf einem Chip integriert werden. Dieser Chip kann dabei ein aus dem Stand der Technik bekannter Siliziumchip sein, wie in "CMOS-Bildsensoren" von D. Scheffler und J. Seijnaeve in Laser + Photonik; Mai 2005; S. 32-35 beschrieben.

Der A/D-Wandler wandelt das analoge elektrische Signal in einen digitalen Wert um. Dies ist hinlänglich im Stand der Technik beschrieben. In einer bevorzugten Ausführungsform wird ein im Stand der Technik bekannter 8 bit A/D-Wandler benutzt. Dieser A/D-Wandler wandelt die elektrischen Signale in 256 verschiedene Intensitätsstufen um. Dabei sind die Intensitätsstufen jeweils gleich groß. Auf diese Weise können die detektierten Messwerte mit deutlich weniger Speicheraufwand weiter verarbeitet werden. Zusätzlich oder alternativ kann ein Verstärker an jeden Pixel integriert werden. Dies führt zusätzlich zur Verstärkung der Signale und damit zur Möglichkeit auch kleinere Signaländerungen zu detektieren. Mit Hilfe dieser Datenumwandlung und/oder Verstärkung kann die Datenmenge, die an die Auswerteeinheit weitergeleitet wird stark reduziert werden. Daraus ergeben sich folgende Vorteile:
1. Es ist ein schnelles Auslesen der Daten möglich,
2. Es können gezielt bestimmte Bereiche ausgelesen werden
3. Nach einer groben Abrasterung des Nachweisbereiches, können besonders interessante Bereiche, genannt "ROI" (region of interest) festgelegt und ausgelesen werden.

Die von der Detektionseinheit empfangenen Signale werden an eine Auswerteeinheit weitergeleitet. Diese Auswerteeinheit kann in der Detektionseinheit integriert sein oder separat davon vorliegen. Die Auswerteeinheit kann wiederum mit einer Anzeigeeinheit verbunden sein bzw. die Anzeigeeinheit kann in die Auswerteeinheit integriert sein. In der Auswerteeinheit werden die elektrischen Signale von jedem Pixel der Detektionseinheit ausgezählt. Wenn die Signale nicht bereits in der Detektionseinheit in digitale Werte umgewandelt wurden, kann dies in der Auswerteeinheit geschehen. Außerdem können die Signale zusätzlich verstärkt werden. Die Höhe des einzelnen Signals entspricht dabei einer Intensität des Lichtes, die durch einzelne Pixel erfasst wurde.

In einer bevorzugten Ausführungsform wird das maximale Signal, das durch den Detektor empfangen werden kann, einem Grauwert von 255 gleichgesetzt. Empfängt der Detektor kein Licht, so entspricht das Signal dem Grauwert 0. Alle Intensitäten, die zwischen dem maximalen Grauwert 255 und dem minimalen Grauwert 0 liegen, werden in 254 Graustufen unterteilt. Erfindungsgemäß wird eine Histogrammauswertung beschrieben, die auf Basis von Häufigkeiten von Lichtintensitäten, umgerechnet in Grauwerte, des von den Teilbereichen abgestrahlten Lichtes, die Konzentration eines Analyten ermitteln kann. Bei der Vermessung einer Probe kann zunächst der Nachweisbereich des Testelementes ohne Probe vermessen werden. Dabei wird eine Häufigkeitsverteilung von Grauwerten ermittelt. Wenn das unbenetzte Testelement wenige bis keine Störstellen aufweist, findet sich eine schmale Verteilung von Häufigkeiten um einen häufigsten Grauwert herum im Histogramm.

Bei Applikation der Probe auf den Nachweisbereich, wird mindestens ein Teil des Nachweisbereiches mit Probeflüssigkeit benetzt. In diesem mindestens einen Teilbereich kann eine Reaktion zwischen dem Analyt in der Probe mit dem Reagenz auf dem Nachweisbereich stattfinden. Daraus kann eine Änderung einer optischen Eigenschaft (wie beispielsweise Farbänderung) des Reagenz eintreten. In einer bevorzugten Ausführungsform tritt eine Verdunkelung des benetzten Teilbereiches ein. Diese Verdunkelung rührt von der Freisetzung eines Farbstoffes, bei der Reaktion des Analyten mit dem Nachweisreagenz. Der freigesetzte Farbstoff absorbiert das auf den Nachweisbereich eingestrahlte Licht, wodurch weniger Licht am Nachweisbereich reflektiert und damit detektiert wird. Diese Verdunkelung führt zu einer Veränderung der Grauwerte dieser Teilbereiche. Im Histogramm ist dies durch eine Verschiebung von Grauwerten, mindestens eines Teils der Häufigkeiten, zu erkennen. Wenn die Reagenzien und die Probe im Nachweisbereich sehr homogen verteilt sind, werden nahezu alle Teilbereiche des benetzten Nachweisbereiches einen ähnlichen Grauwert aufweisen, was sich im Histogramm als ein zweites Maximum zusätzlich zum ersten Maximum der unbenetzten Areale an Häufigkeiten bei diesem Grauwert zeigt.

Aufgrund der Veränderung der Häufigkeitsverteilungen vor- und nach Benetzung mindestens eines Teils des Nachweisbereiches, kann die Konzentration des Analyten ermittelt werden. Hierzu wird eine Referenzierung der Grauwertverschiebung vorgenommen. Der mindestens eine Grauwert zur Berechnung der Analytkonzentration kann dabei frei gewählt werden. Ein Grauwert ist zur Bestimmung der Konzentration des Analyten ausreichend, es können jedoch auch mehrere ausgewählt werden. Die Beziehung des bzw. der ausgewählten Grauwerte zu der zu analysierenden Analytkonzentration sollte jedoch bekannt sein. Diese Beziehung wird als Referenzierung bezeichnet. Die Referenzierung kann entweder auf eine Grauwertverschiebung des mindestens einen ausgewählten Grauwertes in Bezug auf einen unbenetzten Teilbereich stattfinden oder in Bezug auf einen Referenzbereich. Bei dieser Referenzierung wird die Grauwertverschiebung, also die Differenz zwischen dem ausgewählten Grauwert der zu analysierenden Probe und dem Grauwert des unbenetzten Teilbereiches oder dem Referenzbereich bestimmt. Diese Grauwertverschiebung oder Differenz wird mit Grauwertverschiebungen für verschiedene, bekannte Glucosekonzentrationen verglichen. Aus diesem Vergleich kann sofort auf die Glucosekonzentration in der Probe geschlossen werden. Um einen reproduzierbaren Bezug zwischen dem ausgewählten Grauwert der zu bestimmenden Probe und dem Grauwert des Referenzierungssystems zu gewährleisten sollte darauf geachtet werden, dass dieser ausgewählte Grauwert repräsentativ für die Glucosekonzentration ist. Ein Beispiel für einen repräsentativen Grauwert, der benetzten Teilbereiche, stellt der Grauwert mit einer maximalen Häufigkeit dar.

Eine Möglichkeit diese Grauwertverschiebung aus den gemessenen Werten festzulegen, ist die Bestimmung des Abstandes der Maximalwerte der Häufigkeiten vor- und nach Benetzung. Alternativ kann einer der mindestens einen Grauwerte genommen werden, die einen bestimmten Prozentsatz, beispielsweise 50, 60, 70 oder 80 %der Häufigkeit der maximalen Häufigkeit aufweisen. Es können auch die Mittelwerte aus mehreren Grauwerten mit einer bestimmten Häufigkeit benutzt werden.

In einer Ausführungsform soll die Auswertung des Nachweisbereiches nach vollständig abgelaufener Reaktion stattfinden. Hierzu sollte ein Endpunkt der Reaktion ermittelt werden. Dies kann durch Beobachtung der Geschwindigkeiten der Änderung der Häufigkeiten während des Reaktionsprozesses geschehen. Dabei kann festgelegt werden, dass die Reaktion abgeschlossen ist, wenn ein Geschwindigkeits-Schwellenwert für die Änderungsgeschwindigkeit unterschritten wird. Zu diesem Zeitpunkt kann davon ausgegangen werden, dass die Reaktion zu mehr als beispielsweise 95 % abgelaufen ist.

Eine weitere Möglichkeit die Häufigkeitsverteilung zur Bestimmung der Konzentration des Analyten zu benutzen, ist die Bestimmung des Grauwertes bei dem die Steigung des Intensitätsverlaufes zwischen der niedrigsten Intensität und der häufigsten Intensität am größten ist. Hier können auch Häufigkeiten herangezogen werden, die einen bestimmten Prozentsatz (z.B. 50 %) der maximalen Steigung erreichen.

Alternativ kann auf Basis von Grauwerten, die einen Häufigkeits-Schwellenwert überschreiten, die Konzentration des Analyten ermittelt werden. Durch die Auswahl von Grauwerten mit einer ausreichenden Häufigkeit wird vermieden, Bereiche auszuwerten, die eine unzureichende Homogenität von Probe und/oder Reagenz aufweisen. Ein Beispiel für einen Bereich mit inhomogener Probeverteilung ist der Randbereich der benetzten Bereiche des Nachweisbereiches. Um eine Verfälschung der Messergebnisse durch diesen inhomogenen Bereich zu eliminieren, kann der Häufigkeits-Schwellenwert so gewählt werden, dass der Randbereich nicht mit in die Analyse aufgenommen wird. Dabei sollen aber nur Grauwerte herangezogen werden, die repräsentativ für den benetzten Bereich sind. Da auch in dem nicht benetzten Bereich dieser Häufigkeits-Schwellenwert überschritten werden kann, muss zur Abgrenzung der Grauwerte des benetzten Nachweisbereiches ein Graustufen-Schwellenwert für die Graustufe eingesetzt werden. Zur Analytbestimmung werden, in einer bevorzugten Ausführungsform nur Häufigkeiten von Grauwerten verwendet, die unterhalb des Graustufen-Schwellenwertes liegen. In einer weiteren Ausführungsform wird aus den Häufigkeiten des benetzten Bereiches die oberhalb des Häufigkeits-Schwellenwertes liegen eine mittlere Häufigkeit ermittelt, die zur Auswertung der Konzentration herangezogen wird.

Eine weiter bevorzugte Ausführungsform ist die Auswertung auf Basis der Geschwindigkeiten der Veränderung der Häufigkeiten der abgestrahlten Lichtintensitäten nach Benetzung des Nachweisbereiches. Hierzu ist eine zeitliche Beobachtung der Veränderung der Häufigkeitsverteilung nach Benetzung des Nachweisbereiches nötig. Dabei wird in vorgegebenen Zeitabständen vor und/oder nach Benetzung des Nachweisbereiches die Intensität der Teilbereiche ermittelt und aus den Intensitäten kann die Häufigkeitsverteilung der Grauwert berechnet werden. In einer bevorzugten Ausführungsform, bei der ein Farbstoff bei der Reaktion des Analyten mit einem Reagenz auf dem Nachweisbereich entsteht, findet die Änderung der Häufigkeitsverteilung der Grauwerte um so schneller statt je mehr Analyt in der Probe ist. Diese unterschiedliche Geschwindigkeit der Farbstoffbildung in Abhängigkeit der Analytkonzentration kann dazu benutzt werden, anhand der Geschwindigkeit der Abdunkelung des Nachweisbereiches eine Konzentrationsbestimmung durchzuführen. Die Geschwindigkeit der Abdunkelung spiegelt sich in der Geschwindigkeit der Häufigkeitsverschiebung wieder.

Eine weitere bevorzugte Ausführungsform zur Bestimmung der Konzentration des Analyten kann auf Basis von mindestens einem Teil der Häufigkeiten geschehen, die eine niedrigere Intensität aufweisen als der Maximalwert des zweiten Maximums, hervorgerufen durch die benetzten Teilbereiche.

Dieser mindestens eine zur Bestimmung der Konzentration ausgewählte Grauwert, kann mit einem entsprechenden Referenzsystem verglichen werden und daraus auf die Konzentration des Analyten geschlossen werden.

Mit Hilfe der Häufigkeitsverteilung kann zusätzlich ermittelt werden, ob eine ausreichende Benetzung des Nachweisbereiches stattgefunden hat. Hierzu wird ermittelt, ob eine ausreichende Anzahl von Pixeln eine Grauwertverschiebung erfahren hat. Bei Überschreiten einer bestimmten Zahl aller verschobener Intensitäten, kann eine ausreichende Benetzung des Nachweisbereiches festgestellt werden.

Des Weiteren kann der Reaktionsendpunkt bestimmt werden, indem nach Aufgabe der Probe die Änderung der Häufigkeitsverteilung mit der Zeit ermittelt wird. Wenn sich die Häufigkeitsverteilung über einen bestimmten Zeitraum nur noch innerhalb eines bestimmten Bereiches verändert kann davon ausgegangen werden, dass die Reaktion abgeschlossen ist. Dieses Zeitintervall kann im Bereich von Minuten liegen, liegt in einer bevorzugten Ausführungsform jedoch innerhalb von 1-10 Sekunden. Das Intervall, in dem sich die Häufigkeitsverteilung hierbei noch verändern darf, liegt bei wenigen Prozent und sollte 5 % nicht übersteigen.

Eine alternative Möglichkeit die Analytkonzentration zu bestimmen, ist die zeitliche Verfolgung der Häufigkeitsverteilung von Intensitäten bzw. Grauwerten nach Benetzung des Nachweisbereiches. Hierzu können multivariate Auswerteverfahren herangezogen werden, wie sie im Stand der Technik bekannt sind. Beispielsweise ist eine Auswertung der Histogramme zu verschiedenen Zeitpunkten der ablaufenden Reaktion mit Hilfe der "Partial Least Square" (PLS) Methode oder der "Principle component regression" (PCR) Methode mögliche, wie sie in der Veröffentlichung von H. Martens und T. Naes, "multivariate calibration", ISBN 0471 90979 3 beschrieben sind. Auch andere statistische Methoden können hierzu herangezogen werden.

Die Häufigkeitsverteilung von Intensitäten kann weiterhin zur Qualitätskontrolle eingesetzt werden. Je nach Größe der Blutmenge und Verteilung des Analyten auf dem Nachweisbereich, können Randeffekte in Form eines Randbereiches eine entscheidende Rolle spielen und das Messergebnis beeinträchtigen. Von einem Randbereich kann vor allem dann gesprochen werden, wenn der Nachweisbereich nicht vollständig benetzt ist. Im Histogramm zeigt sich der Randbereich zwischen den Intensitätsanhäufungen um das Häufigkeitsmaximum des unbenetzten und des benetzten Teils des Nachweisbereiches. Da der Randbereich durch inhomogene Verteilung der Probe auf dem Nachweisbereich charakterisiert ist, kann er je nach Analytkonzentration in der Probe ein unterschiedlich breites Intervall von Grauwerten umfassen. Trotz einer weitgehend homogenen Verteilung der Probe in der Fleckmitte findet man eine veränderte Probenverteilung in den Randbereichen. In diesen Randbereichen kann ein veränderter Analytaustausch zwischen Bluttropfen und Reagenzienschicht stattfinden. Da es sich meist um eine Störung des Analytaustausches handelt, findet eine geringere Umsetzung des Analyten statt. In einer bevorzugten Ausführungsform bedeutet die geringere Umsetzung von Analyt eine höhere detektierte Intensität der im Randbereich. Diese Änderung ist von vielen Faktoren abhängig, unter anderem von der Viskosität sowie von der Konzentrationsverteilung verschiedener Blutparameter wie z. B. Glucose und Hämatokrit in der Probe. Eine andere Ursache für Inhomogenitäten ist die Beschaffenheit des Testelementes im Nachweisbereich. Auch diese Inhomogenitäten können zu verändertem Austausch von Analyt mit den Reagenzien führen. Insbesondere bei der Analyse kleiner Volumina, bei denen das Rand/Fläche-Verhältnis zu Gunsten der Ränder stark anwächst, führt eine einfache Mittelung über den Probenfleck zu stark verfälschten Messergebnissen. Eine Mittelung über alle inhomogen und homogen benetzten Teilbereiche könnte bei sehr kleinen Probenmengen zu unzureichender Genauigkeit der Messergebnisse führen. Bei sehr kleinen Probevolumina kann der Randbereich des Tropfens in seiner Ausdehnung ähnlich groß sein wie der homogene Kernbereich des Tropfens. Dies kann dazu führen, dass kein Grauwert der benetzten Teilbereiche einen unteren Häufigkeits-Schwellenwert überschreitet. Ist dies der Fall, kann ein zusätzlicher Algorithmus angewendet werden, der die Häufigkeiten des Randbereiches mit berücksichtigt.

Je nachdem, ob der Nachweisbereich von der Seite vermessen wird, auf der das Blut appliziert wird, oder von der gegenüberliegenden Seite, kann das Reflektionsverhalten unterschiedlich sein. So konnte festgestellt werden, dass besonders in den Randbereichen, die beschriebene inhomogene Verteilung der Probe, zu unterschiedlichen Anreicherungen verschiedener Bestandteile in verschiedenen Bereichen des Nachweisbereiches führt. In einer bevorzugten Ausführungsform werden beispielsweise Testelemente benutzt, die einen Nachweisbereich aufweisen, der mehrere Schichten enthält. Eine der Schichten ist dazu ausgelegt, dass große Bestandteile der Probe, wie beispielsweise rote Blutkörperchen in einer Blutprobe am weiteren Eindringen gehindert werden. Von dieser Schicht wird das Licht im Randbereich anders reflektiert als von der gegenüberliegenden Seite des Nachweisbereiches. In einer bevorzugten Ausführungsform wird der Nachweisbereich von der, der Blutaufgabe gegenüberliegenden Seite, vermessen. Im Gegensatz dazu wird bei der Transmissionsmessung auf der Blutaufgabeseite detektiert.

Um eine optimale Auswertung eines Nachweisbereiches eines Testelementes durchzuführen, ist es möglich eine Qualitätskontrolle vor der Benutzung des Testelementes durchzuführen. Hierzu wird das Testelement vor Benetzung mit Hilfe der Detektionseinheit ortsaufgelöst vermessen. Anhand der Häufigkeitsverteilung der gemessenen Intensitäten der verschiedenen Teilbereiche kann untersucht werden, ob das Testelement eine ausreichende Homogenität aufweist und das Testelement zur Benutzung geeignet ist. Hierzu können verschiedene Qualitätskriterien herangezogen werden. Ein Qualitätskriterium ist die Anzahl von Intensitäten innerhalb eines vorgegebenen Intensitätsintervalls. Der Häufigkeitsanteil der Intensitäten, die innerhalb des vorgegebenen Intervalls liegen, muss einen Intervall-Schwellenwert überschreiten, damit das Testelement zur Benutzung freigegeben werden kann. Wenn beispielsweise weniger als 90 % der gemessenen Intensitäten in diesem Intervall vorzufinden sind, dann kann das Testelement von der Benutzung ausgeschlossen werden, da zu befürchten ist, dass die Messergebnisse durch Unregelmäßigkeiten des Nachweisbereiches gestört werden. Hierbei hängt die breite des Intensitätsintervalls von den Eigenschaften des Nachweisbereiches ab. Die Untauglichkeit des Testelementes kann dabei von dem System durch ein Warnsignal, wie z.B. ein akustisches oder optisches Signal dem Patienten angezeigt werden.

Eine zweite Möglichkeit die Qualität des Nachweißbereiches zu überprüfen ist, alternativ oder zusätzlich die Intensität -beziehungsweise den Grauwert- der zu der mittleren oder maximalen Häufigkeit gehört, mit einem Qualitäts-Schwellenwert zu vergleichen. Liegt der Grauwert, der der mittleren bzw. maximalen Häufigkeit entspricht unterhalb des Qualitäts-Schwellenwertes, so ist davon auszugehen, dass das Testelement im Nachweisbereich verschmutzt ist und sollte aus diesem Grund nicht zur Benutzung herangezogen werden.

Eine weitere Möglichkeit der Qualitätskontrolle ist der Vergleich der maximalen Häufigkeit mit einem Referenz-Schwellenwert. Wenn dieser Referenz-Schwellenwert nicht überschritten wird, ist davon auszugehen, dass aufgrund von Verschmutzung zu viele Pixel einen veränderten Grauwert aufweisen und nach Benetzung die Messung verfälschen könnten.

### Kurze Figurenbeschreibung:

- Figur 1a:: Schematische Darstellung eines Systems zur Beleuchtung eines Testelements inklusive einer Detektionseinheit zur Detektion der reflektierten Strahlung sowie einer Auswerteeinheit
- Figur 1b:: Schematische Darstellung eines Systems zur Beleuchtung eines Testelements inklusive einer Detektionseinheit zur Detektion der transmittierten Strahlung sowie einer Auswerteeinheit
- Figur 1c:: Schematische Darstellung eines Systems zur ortsaufgelösten Beleuchtung eines Testelements inklusive einer Detektionseinheit zur Detektion reflektierter Strahlung sowie einer Auswerteeinheit
- Figur 2a:: Grauwertverteilung eines unbenetzten Teststreifens
- Figur 2b:: Grauwertverteilung nach Benetzung eines Teils des Nachweisbereiches
- Figur 3:: Darstellung einer Referenzkurve zur Ermittlung von Analytkonzentrationen in unbekannten Proben
- Figur 4a:: Darstellung eines Tropfens auf einem Nachweisbereich
- Figur 4b:: Darstellung der Intensitätsverteilung (umgerechnet in Grauwerte) des Tropfens aus 4a in einem Histogramm
- Figur 4c:: Darstellung der dunkelsten Punkte auf dem Nachweisbereich in einem Histogramm
- Figur 4d:: Darstellung der am häufigsten vertretenen Grauwerte im benetzten Bereich in einem Histogramm
- Figur 4e:: Darstellung des Randbereiches des aufgegebenen Tropfens in einem Histogramm
- Figur 4f:: Darstellung des unbenetzten Bereiches auf dem Nachweisbereich in einem Histogramm.
- Figur 5:: Darstellung eines Zeitverlaufes der Grauverteilung bei Benetzung eines Teiles des Nachweisbereiches

In Figur la ist ein System dargestellt, das ein Testelement (1) mit einem Nachweisbereich (2) enthält, welches von einer Lichtquelle (3) bestrahlt wird. Zwischen der Lichtquelle (3) und dem Testelement (1) können abbildende Einheiten angebracht sein, wie beispielsweise Linsen und/oder Blenden. In diesem Beispiel sind sowohl eine Blende (4) wie auch eine Linse (5) zwischen Lichtquelle und Nachweisbereich (2) des Testelementes (1) angeordnet, um den Nachweisbereich (2) möglichst homogen auszuleuchten. Das von dem Nachweisbereich (2) abgestrahlte Licht wird von einem Detektor (6) aufgefangen. Dieser Detektor (6) sollte mindestens 10 Pixel (17) beinhalten, um den Nachweisbereich (2) ortsaufgelöst detektieren zu können. In einer Auswerteeinheit (7), die mit dem Detektor (6) verbunden ist, werden die Signale des Detektors (6) ausgewertet. Eine bevorzugte Ausführungsform des Detektors ist ein CMOS-Detektor, der mindestens einen A/D-Wandler beinhaltet, um die analogen elektrischen Signale in digitale Signale umzuwandeln. Diese digitalen Signale können an die Auswerteeinheit (7) weitergeleitet werden, um dort den verschiedenen Auswertungen unterzogen zu werden. Die berechneten Messwerte können über eine Anzeigeeinheit (7b), die an die Auswerteeinheit angeschlossen oder in diese integriert ist angezeigt werden. In einer bevorzugten Ausführungsform wird ein Detektor (6) verwendet der einen Wandler in einem Bereich von 8 bis 12 bit aufweist. Der Messbereich wird mit Hilfe des Detektors (6) zwischen seinem Null-Wert und seinem Maximalwert in 256 Grauwerte unterteilt. Die Auswerteeinheit (7) ist dazu ausgelegt, die Häufigkeiten der 256 Grauwerte zu zählen. Diese Häufigkeiten können in einem Histogramm (10) gegenüber den Intensitätsintervallen, die man auch als Grauwerte (11) bezeichnet, aufgetragen werden. Jedes Intensitätsintervall wird hierbei einem Grauwert zugeteilt.

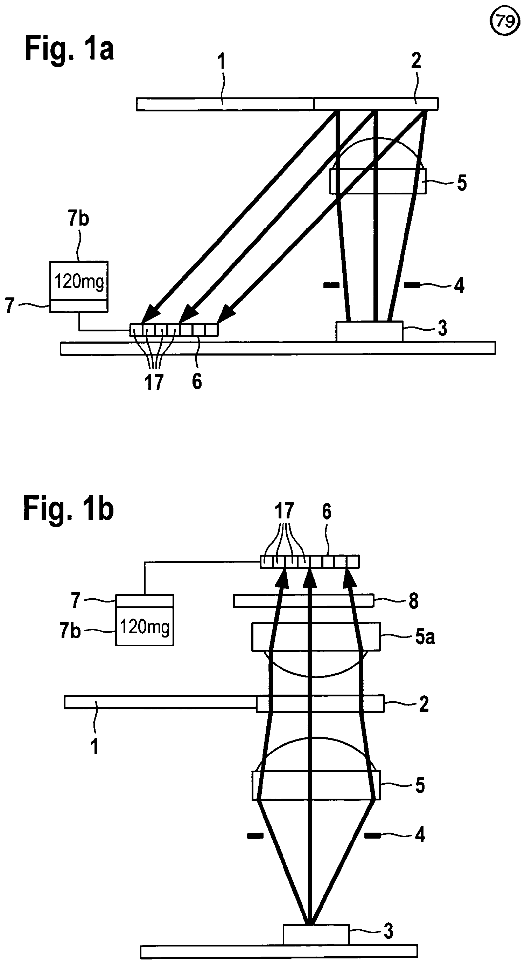

In Figur 1b wird ein System zur Transmissionsmessung dargestellt. Hier befindet sich das Testelement (1) mit seinem Nachweisbereich (2) zwischen der Lichtquelle (3) und dem Detektor (6). Auch hier können sowohl zwischen dem Testelement (1) und der Lichtquelle (3), sowie zwischen Testelement (1) und Detektor (6) abbildende Einheiten, verwendete werden. In diesem Beispiel befinden sich sowohl eine Blende (4) wie auch eine Linse (5) zwischen Lichtquelle (3) und Testelement (1), sowie eine Linse (5a) zwischen Testelement (1) und Detektor (6). Der Detektor (6) ist ebenfalls zur ortsaufgelösten Messung befähigt, weshalb er eine Vielzahl von Pixeln (17) aufweist. Der Detektor (6) ist wiederum mit einer Auswerteeinheit (7) verbunden. Eine Anzeigeeinheit (7b) ist wiederum mit der Auswerteeinheit (7) verbunden oder in diese integriert. Diese Transmissionsanordnung kann bevorzugter Weise für Fluoressenzmessungen verwendet werden. Bei solch einer Anordnung ist ein Filter (8) der das Anregungslicht abblockt zwischen Testelement (1) und Detektor (6) vorgesehen.

Figur lc stellt ein System zur ortsaufgelösten Beleuchtung des Nachweisbereiches (2) dar. Bei dieser Anordnung wird eine Lichtquelle (3) benutzt, die nur einen Teilbereich des Nachweisbereiches (2) ausleuchtet. Wenn nur eine Lichtquelle (3) benutzt wird, so wird das Licht über einen Reflektor (hier nicht dargestellt) auf verschiedene Teilbereiche des Nachweisbereiches (2) fokussiert. In dem hier abgebildeten System werden verschiedene Lichtquellen (3), die, wie hier dargestellt, in einem Array (3a) angeordnet sind, auf den Nachweisbereich (2) gerichtet. Auf diese Weise können sequentiell oder gleichzeitig mindestens ein Teilbereich des Nachweisbereiches (2) ausgeleuchtet werden. Wenn der Nachweisbereich (2) sequentiell ausgeleuchtet wird, was man auch als abrastern bezeichnet, so kann eine einzelne Photodiode als Detektor (6) benutzt werden. Wenn jedoch der Nachweisbereich (2) gleichzeitig durch mehr als eine Lichtquelle (3) des Array's (1a) ausgeleuchtet wird, dann wird für eine ortsaufgelöste Messung ein ortsauflösender Detektor (6) benötigt. Auch hier ist der Detektor (6) mit einer Auswerteeinheit (7) verbunden, die die Messsignale des Detektors (6) zur weiteren Auswertung erhält. Eine Anzeigeeinheit (7b) ist mit der Auswerteeinheit (7) verbunden oder in diese integriert.

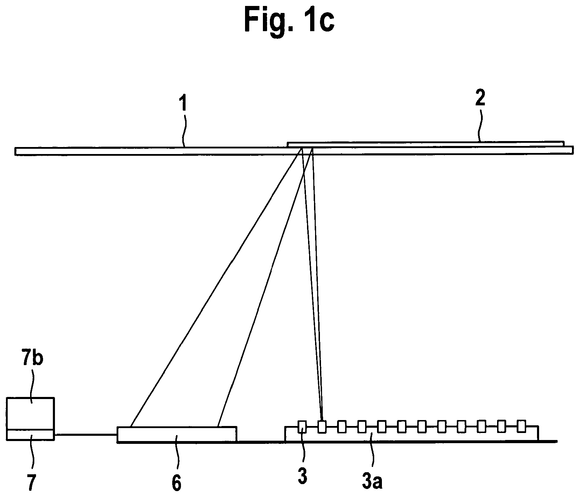

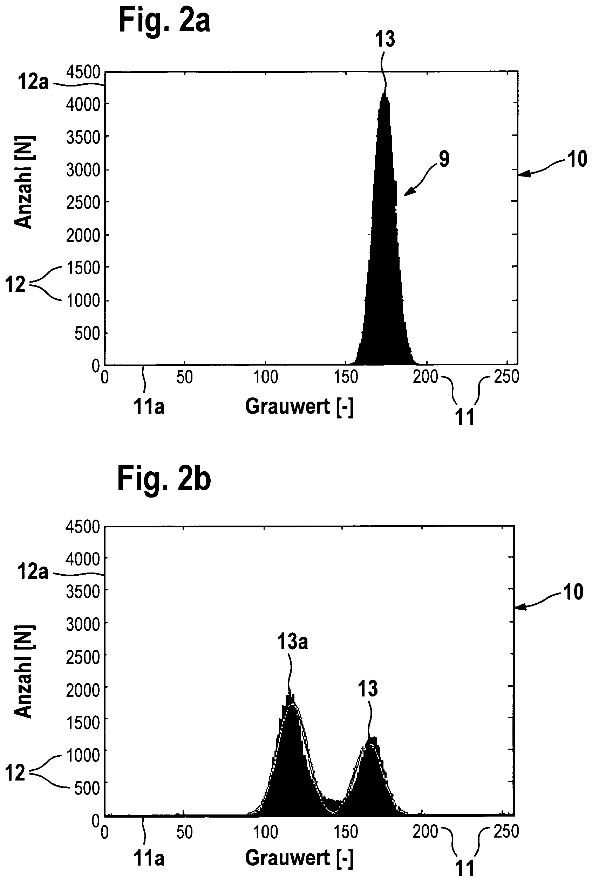

Alle weiteren Messungen, die in den Figuren 2-5 dargestellt werden, sind mit einer Apparatur wie sie in Figur 1c beschrieben wurde vermessen.

In Figur 2a ist die Grauwertverteilung (9) eines unbenetzten Testelementes (1) dargestellt. Die Darstellung findet in Form eines Histogramms (10) statt, wobei die Grauwerte (11) (im dargestellten Beispiel 256) auf der X-Achse (11a) aufgetragen werden, während die Anzahl der detektierten Grauwerte (12) auf der Y-Achse (12a) wiedergegeben ist. Anhand der Verteilung der Grauwerte (11) kann auf die Homogenität des Nachweisbereiches (2) des Testelementes (1) zurück geschlossen werden. In diesem Beispiel liegen die Grauwerte (11) zwischen 0 und 200, wobei der häufigste Grauwert des unbenetzten Nachweisbereiches bei 173 liegt. Dies ist aus dem Maximum (13) des Grauwert-Histogramms (10) in Figur 2a ersichtlich. Je Höher der Grauwert (11) liegt, desto heller ist das entsprechende Objekt. Wird nun der Nachweisbereich (2) teilbenetzt, so verdunkelt sich ein Teil des Nachweisbereiches (2) und damit dessen Abbild auf dem Detektor (6) an einigen Pixeln.

Figur 2b zeigt eine Verdunkelung des Nachweisbereiches (2) nach Applikation eines Probetropfens. Da der Nachweisbereich (2) nur zu einem Teil benetzt wurde, in diesem Fall etwas mehr als die Hälfte der Teilbereiche, weist das Histogramm (10) zwei Maxima (13) und (13a) von Grauwerten (11) auf. Aufgrund dieser Verdunkelung nimmt die Intensität des Lichtes, das von den benetzten Teilbereichen abgestrahlt wird ab und die Pixel des Detektors, die diese Teilbereiche vermessen detektieren ein niedrigeres Signal. Dies führt im Histogramm (10) zu niedrigeren Grauwerten. Der kleinere Teil an Pixeln, der dem unbenetzten Bereich entspricht, weist nach wie vor einen Grauwert (11) von ca. 173 auf, während ein größerer Teil der Pixel nun im Mittel einen Grauwert (11) von 115 aufweist. Die Differenz zwischen dem mittleren Grauwert (11) des unbenetzten Bereiches des Nachweisbereiches (2) und dem Grauwert (11) des dunkleren Bereiches nach Benetzung, hängt von der Verfärbung des Nachweisbereiches (2) und damit von der Glukosekonzentration ab. Somit kann aus der Veränderung der Grauwerte (11) direkt auf die Glukosekonzentration geschlossen werden.

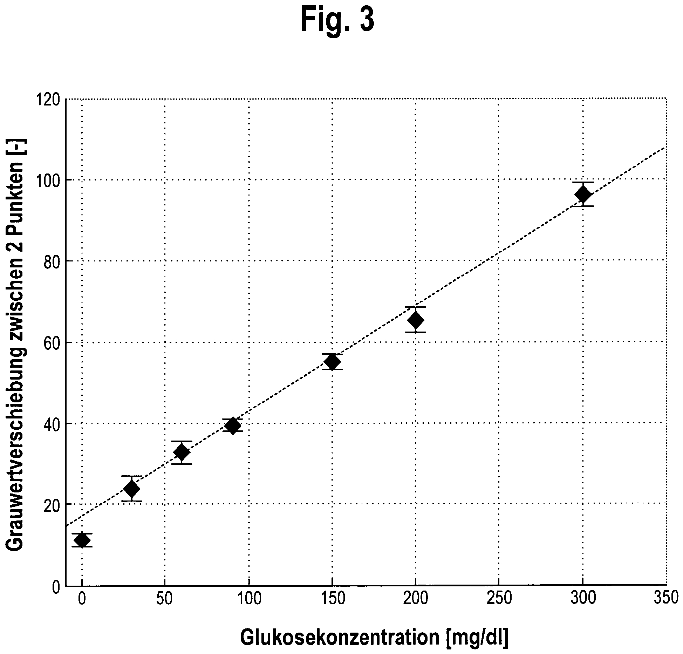

In Figur 3 ist eine typische Referenzkurve (15) dargestellt, wie sie zur Berechnung der Konzentration des Analyten (in diesem Beispiel Glucose) in einer Probe mittels der beschriebenen Histogrammanalyse benötigt wird. Zur Ermittlung dieser Referenzkurve (15) werden Flüssigkeitsproben mit bekannter Konzentration mit Hilfe einer der oben beschriebenen Methoden untersucht. Dabei wird beispielsweise einer Häufigkeitsverschiebung der Grauwerte (genannt Δ GW) (16) der Maxima (13) und (13a) einer Glucosekonzentration zugeordnet. Dies ist nur eine schematische Darstellung einer solchen Referenzkurve (15), denn die absoluten Werte können je nach benutzter Grauwerte (11) aus dem Histogramm (10) variieren. Anhand dieser Referenzkurve (15) kann verdeutlicht werden, wie die Verschiebung der Häufigkeiten der Grauwerte (16) in eine Konzentration umgesetzt werden kann. So entspricht eine große Verschiebung der Häufigkeiten (16) einer hohen Analytkonzentration und umgekehrt.

Zur Berechnung einer unbekannten Probe, wird der Δ GW Wert in der Auswerteeinheit (7) mit Hilfe der vom Detektor (6) gemessenen Intensitäten des benetzten Nachweisbereiches (2) ermittelt. Dies wird mit dem gleichen Verfahren wie zur Ermittlung der Referenzkurve (15) durchgeführt. Da die Referenzkurve (15) in der Auswerteeinheit (7) gespeichert ist, kann die Analytkonzentration dort sofort abgelesen werden.

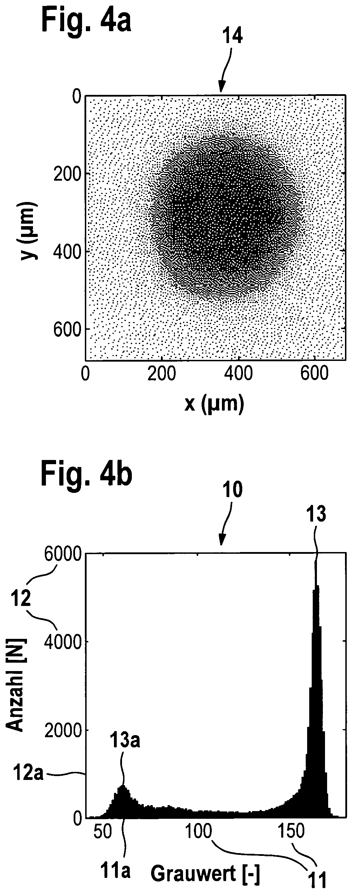

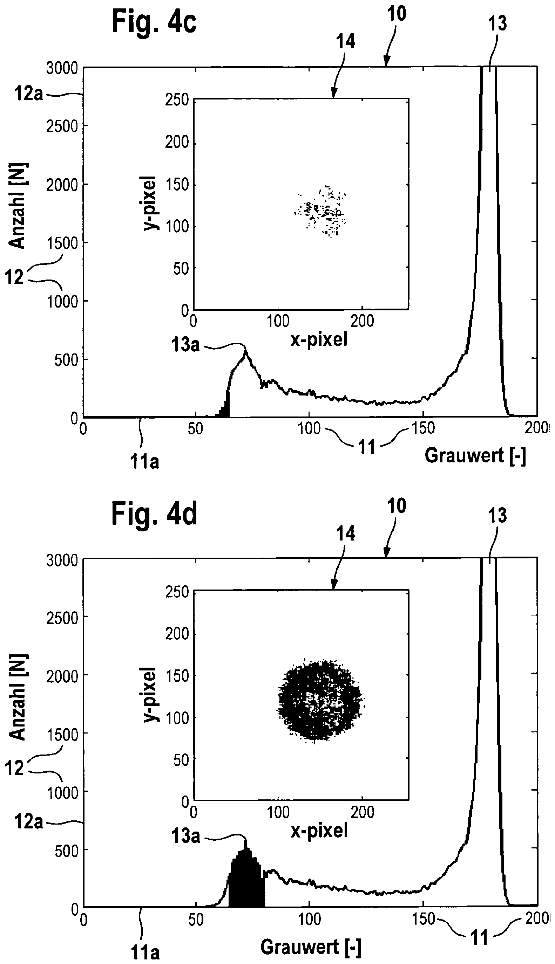

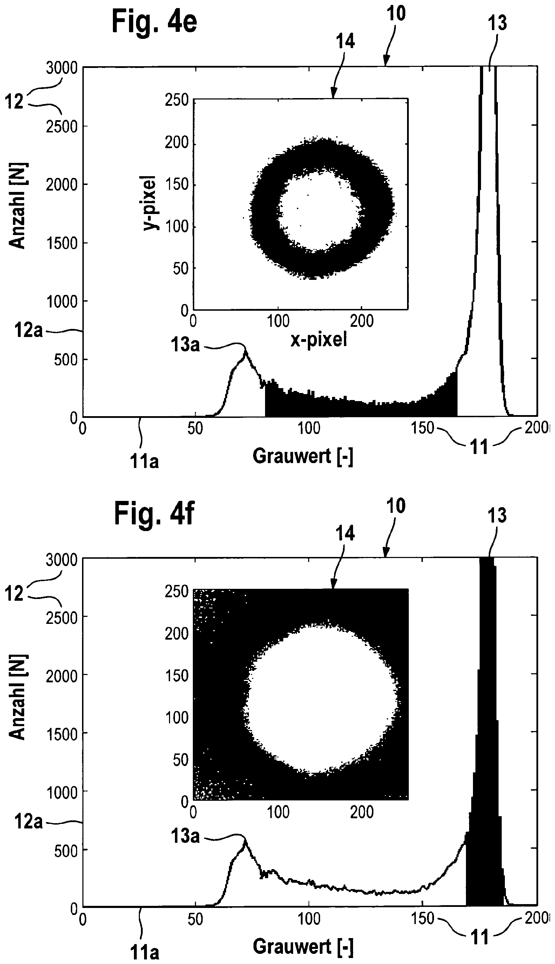

In den Figuren 4a bis 4e ist der Zusammenhang zwischen der Grauwertverteilung im Histogramm (10) und den dazugehörigen benetzten Flächen dargestellt. In Figur 4a ist eine schwarz-weiß Darstellung eines Tropfens (14) gezeigt, der auf den Nachweisbereich (2) aufgebracht wurde. Der Nachweisbereich hat eine Ausdehnung von ca. 650 * 650 µm. In Figur 4b ist das dazugehörige Histogramm (10) gezeigt, das die Grauwerte (11) des gesamten Nachweisbereiches (2) darstellt. Hierbei ist zu erkennen, dass der größte Teil des Nachweisbereiches (2) nach wie vor unbenetzt ist, weshalb das größere Maximum (13) an Grauwerten (11) weiterhin bei ca. 173 liegt. Ein weiteres Maximum (13a) liegt bei einem Grauwert (11) von ca. 65. Betrachtet man, wie in Figur 4d dargestellt, Grauwerte (11), die um dieses Maximum (13a) herumliegen, also oberhalb des Häufigkeits-Schwellenwertes in diesem Grauwertbereich liegen, so erkennt man in der Tropfendarstellung (14) in Figur 4d, dass diese Pixel zum inneren Bereich des Tropfens gehören. Diese Pixel sind sehr homogen über den Kern des Tropfens verteilt. Angrenzend an diesen homogenen Bereich im Histogramm (10), gibt es wenige Pixel, die einen sehr niedrigen Grauwert aufweisen, wie in Figur 4a in der Tropfendarstellung (14) dargestellt. Auch diese Punkte befinden sich im Zentrum des Probentropfens. In der Tropfendarstellung (14) der Figur 4e ist der Randbereich des Tropfens dargestellt. Die Grauwerte (11) dieses Randbereiches liegen zwischen den Grauwerten (11) des unbenetzten und des homogen benetzten Bereiches. In Figur 4f sind die Pixel des unbenetzten Teiles des Nachweisbereiches (2) dargestellt. Da in diesem Beispiel nur ein Teil des Nachweisbereiches (2) benetzt ist, ist die Häufigkeit der Grauwerte (11) um den Maximalwert sehr groß.

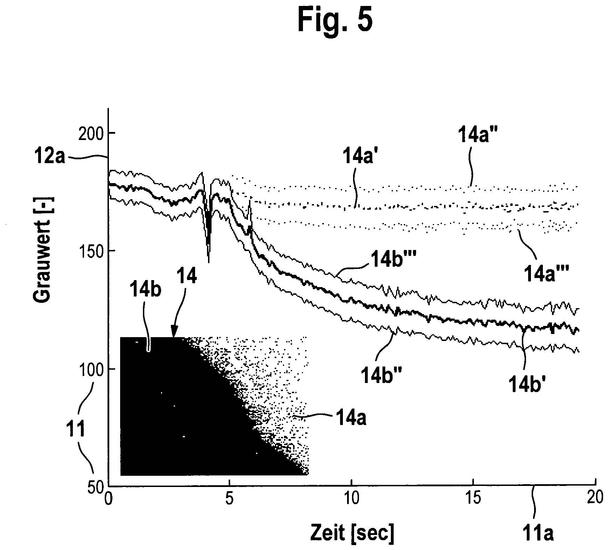

Figur 5 zeigt einen Zeitverlauf der Grauwertverteilung beim Vorgang der Benetzung. In diesem Diagramm ist die Zeit auf der X-Achse (11a) gegen die Grauwerte (11) auf der Y-Achse (12a) aufgetragen. Zu Beginn der Messung bis zum Zeitpunkt von 4 Sekunden ist der Nachweisbereich (2) unbenetzt und weist einen Grauwert (11) von ungefähr 173 auf. Beim Vorgang der Benetzung bei ca. 4 Sekunden nimmt der Grauwert (11) kurzfristig durch die Abdunkelung des Detektors (6) ab und verläuft anschließend vom Grauwert (11) bei ca. 173 in zwei verschiedenen Richtungen weiter. Der unbenetzte Teil (14a) des in dem Bild (14) dargestellten Ausschnittes eines teilbenetzten Nachweisbereiches (2) bleibt weiterhin bei dem Grauwert (11) von 173. Die am häufigsten gemessenen Grauwerte des unbenetzten Teils sind in der Kurve (14a') abgebildet. Sämtliche Grauwerte (11) des unbenetzten Bereiches (14a) liegen zwischen den Kurven (14a") und (14a‴). Eine ähnliche Verteilung der Grauwerte (11) ist um die maximale Häufigkeit der Grauwerte (11) des benetzten Bereiches (14b) zu erkennen. Der größte Teil der benetzten Teilbereiche des Nachweisbereiches (2) liegt auf der Kurve (14b). Auch in dem benetzten Teilbereich (14b) gibt es Pixel, die einen geringeren Grauwert (11) aufweisen oder einen höheren Grauwert (11) aufweisen als die Pixel der Kurve (14b'). Dieser Grauwertbereich ist begrenzt durch die Kurven (14b") zu kleinen Grauwerten hin und durch die Kurve (14b‴) zu größeren Grauwerten hin. Anhand dieser Kurve ist zu erkennen, dass die Reaktion auf dem Nachweisbereich zum Zeitpunkt von ca. 15 Sekunden abgeschlossen ist. Der Verlauf der Kurve (14b') kann zur Bestimmung des Analyten herangezogen werden, wenn die Kurvenverläufe für verschiedene Konzentrationen des Analyten bekannt sind. Außerdem kann die Geschwindigkeit der Häufigkeitsänderung dazu herangezogen werden, den Abschluss der Reaktion festzustellen. Es kann ein Geschwindigkeits-Schwellenwert für das Unterschreiten der Geschwindigkeit der Häufigkeitsänderung festgelegt werden. Wird der Geschwindigkeits-Schwellenwert unterschritten so kann dieser Zeitpunkt dazu genutzt werden die Auswertung des Analyts zu beginnen, wenn dies nötig ist.

## Patentansprüche

1. System zur Bestimmung der Konzentration eines Analyten in einer Flüssigkeitsprobe beinhaltend
- eine Detektionseinheit (6) zur Detektion von Lichtintensitäten (11) die von Teilbereichen eines Nachweisbereiches (2) eines Testelements (1) abgestrahlt werden sowie
- eine Auswerteeinheit (7), die dazu geeignet ist, für die detektierten Lichtintensitäten (11) eine Häufigkeitsverteilung (9) zu ermitteln, wobei die Häufigkeitsverteilung (9) mindestens ein erstes Maximum (13), hervorgerufen durch mindestens einen unbenetzten Teilbereich (14a) oder mindestens einen Referenzbereich und ein zweites Maximum (13a), hervorgerufen durch benetzte Teilbereiche (14b) aufweist, und die dazu geeignet ist aufgrund von Häufigkeiten benetzte Bereiche (14b) des Testelements (1) zu identifizieren und von unbenetzten Bereichen (14a) zu unterscheiden und auf Basis der Häufigkeitsverteilung (9) mindestens eine Lichtintensität des benetzten Bereichs auszuwählen und aus der mindestens einen ausgewählten Lichtintensität die Konzentration des Analyt zu ermitteln.

2. System nach Anspruch 1, **dadurch gekennzeichnet, dass** auf Basis von Intensitätshäufigkeiten nach Aufgabe der Probe bzw. vor und nach Aufgabe der Probe auf den Nachweisbereich (2) die Konzentration des Analyt ermittelt wird.

3. System nach Anspruch 1 oder 2, **dadurch gekennzeichnet, dass** das Testelement (1) ein Reagenz enthält, das weitestgehend homogen in oder auf dem Nachweisbereich (2) verteilt ist.

4. System nach Anspruch 1,2 oder 3 **dadurch gekennzeichnet, dass** ein Probevolumen zwischen 0,1 und 500 nlverwendet wird.

5. System nach einem der Ansprüche 1 bis 4, **dadurch gekennzeichnet, dass** auf Basis von Geschwindigkeiten von Veränderungen der Häufigkeiten der abgestrahlten Lichtintensitäten (11) nach Benetzung des Nachweisbereiches (2), die Konzentration des Analyt ermittelt wird.

6. System nach einem der Ansprüche 1 bis 5, **dadurch gekennzeichnet, dass** auf Basis der Maximalwerte der Häufigkeitsverteilung der Intensitäten (11) vor und nach Benetzung des Nachweisbereiches (2), die Konzentration des Analyt ermittelt wird.

7. System nach einem der Ansprüche 1 bis 6, **dadurch gekennzeichnet, dass** die Auswertung mit Hilfe von multivariaten Analyseverfahren erfolgt.

8. System nach einem der Ansprüche 1 bis 7, **dadurch gekennzeichnet, dass** die Steigung des Intensitätsverlaufes zwischen der niedrigsten Intensität und der häufigsten Intensität zur Bestimmung der Analytkonzentration herangezogen wird.

9. System nach einem der Ansprüche 1 bis 8, **dadurch gekennzeichnet, dass** auf Basis von Intensitäten (11), die einen Häufigkeits-Schwellenwert überschreiten, die Konzentration des Analyten ermittelt wird.

10. System nach einem der Ansprüche 1 bis 9, **dadurch gekennzeichnet, dass** auf Basis der Form von Häufigkeitsverteilungen vor und/oder nach Benetzung eine Qualitätskontrolle stattfindet.

11. System nach einem der Ansprüche 1 bis 10, **dadurch gekennzeichnet, dass** auf Basis des Überschreitens einer bestimmten Häufigkeit der Intensitäten (11), die sich nach Probenaufgabe verändern eine ausreichende Benetzung des Nachweisbereiches (2) festgestellt wird.

12. System nach Anspruch 10, **dadurch gekennzeichnet, dass** auf Basis der Häufigkeitsverteilung vor Benetzung des Nachweisbereiches (2) auf eine ausreichende Homogenität des Nachweisbereiches (2) geschlossen wird.

13. System nach einem der Ansprüche 1 bis 11, **dadurch gekennzeichnet, dass** eine Auswertung des Nachweisbereiches (2) durchgeführt wird, wenn nach Aufgabe der Probe auf den Nachweisbereich (2), die Geschwindigkeit der Änderung der Häufigkeiten unter einem Geschwindigkeits-Schwellenwert liegt.

14. Ein Verfahren zur Bestimmung der Konzentration eines Analyten in einer Flüssigkeit mit den Schritten
■ Aufbringen einer Flüssigkeit auf einen Nachweisbereich (2) eines Testelementes (1)
■ Detektion von Lichtintensitäten (11) des von Teilbereichen abgestrahlten Lichtes
■ Ermittlung einer Häufigkeitsverteilung (9) der detektierten Lichtintensitäten (11), wobei die Häufigkeitsverteilung (9) mindestens ein erstes Maximum (13), hervorgerufen durch mindestens einen unbenetzten Teilbereich (14a) oder mindestens einen Referenzbereich und ein zweites Maximum (13a), hervorgerufen durch benetzte Teilbereiche (14b) aufweist,
■ Identifikation und Unterscheidung der benetzten Bereiche (14b) von unbenetzten Bereichen (14a),
Berechnung der Konzentration des Analyten auf Basis von mindestens einer Lichtintensität des benetzten Bereiches (14b), die aufgrund ihrer Häufigkeit ausgewählt wurde.

15. Verfahren nach Anspruch 14, **dadurch gekennzeichnet, dass** vor dem Aufbringen der Flüssigkeit auf den Nachweisbereich (2) eine Häufigkeitsverteilung der Lichtintensitäten ermittelt wird.

16. Verfahren nach Anspruch 15, **dadurch gekennzeichnet, dass** auf Basis der Häufigkeitsverteilung eine Qualitätskontrolle stattfindet.

17. Verfahren nach Anspruch 16, **dadurch gekennzeichnet, dass** ein Anteil von Häufigkeiten, die innerhalb eines bestimmten Intensitätsintervalls liegen, bestimmt wird.

18. Verfahren nach Anspruch 16, **dadurch gekennzeichnet, dass** das Testelement (1) nicht zur Benutzung herangezogen wird, wenn der Anteil der Häufigkeiten innerhalb des Intervalls einen Intervall-Schwellenwert nicht überschreitet.

19. System nach Anspruch 1, **dadurch gekennzeichnet, dass** die Auswerteeinheit (7) auf einem Chip integriert ist.

20. System nach Anspruch 19, **dadurch gekennzeichnet, dass** die Detektionseinheit (6) einen CMOS-Detektor enthält, der zusammen mit mindestens einem A/D-Wandler auf dem Chip integriert ist.

## Claims

1. A system for determining the concentration of an analyte in a liquid sample containing
- a detection unit (6) for the detection of light intensities (11) emitted from subareas of an detection area (2) of a test element (1) and
- an evaluation unit (7) suitable for establishing a frequency distribution (9) for the detected light intensities (11), wherein the frequency distribution (9) has at least one first maximum (13) caused by at least one unwetted subarea (14a) or at least one reference area, and a second maximum (13a) caused by wetted subareas (14b) and is suitable for identifying wetted areas (14b) of the test element (1) due to frequencies and distinguishing them from unwetted areas (14a) and selecting at least one light intensity of the wetted area on the basis of the frequency distribution (9) and establishing the concentration of the analyte from the at least one selected light intensity.

2. The system according to claim 1, **characterized in that** the concentration of the analyte is determined based on intensity frequencies after application of the sample to the detection area (2) or before and after application of the sample to the detection area (2).

3. The system according to claim 1 or 2, **characterized in that** the test element (1) contains a reagent that is substantially homogenously distributed in or on the detection area (2).

4. The system according to claim 1, 2 or 3, **characterized in that** a sample volume of between 0.1 and 500 nL is used.

5. The system according to any one of claims 1 to 4, **characterized in that** the concentration of the analyte is determined based on rates of changes of the frequencies of the emitted light intensities (11) after wetting the detection area (2).

6. The system according to any one of claims 1 to 5, **characterized in that** the concentration of the analyte is determined based on maximum values of the frequency distribution of the intensities (11) before and after wetting the detection area (2).

7. The system according to any one of claims 1 to 6, **characterized in that** the evaluation is performed by means of multivariate analytical methods.

8. The system according to any one of claims 1 to 7, **characterized in that** the slope of the course of the intensities between the lowest intensity and the most frequent intensity is used to determine the analyte concentration.

9. The system according to any one of claims 1 to 8, **characterized in that** the concentration of the analyte is determined based on intensities (11) exceeding a frequency threshold value.

10. The system according to any one of claims 1 to 9, **characterized in that** a quality control takes place based on the form of frequency distributions before and/or after wetting.

11. The system according to any one of claims 1 to 10, **characterized in that** sufficient wetting of the detection area (2) is observed based on exceeding a certain frequency of the intensities (11) that change after application of a sample.

12. The system according to claim 10, **characterized in that** sufficient homogeneity of the detection area (2) is deduced based on the frequency distribution before wetting of the detection area (2).

13. The system according to any one of claims 1 to 11, **characterized in that** an evaluation of the detection area (2) is performed if the rate of change of the frequencies after application of the sample to the detection area (2) is below a rate threshold value.

14. A method for the determination of the concentration of an analyte in a liquid having the steps of
applying a liquid to an detection area (2) of a test element (1);
detecting light intensities (11) of the light emitted from subareas;
establishing a frequency distribution (9) of the detected light intensities (11), wherein the frequency distribution (9) has at least one first maximum (13) caused by at least one unwetted subarea (14a) or at least one reference area and a second maximum (13a) caused by wetted subareas (14b),
identifying and distinguishing the wetted areas (14b) from unwetted areas (14a);
calculating the concentration of the analyte based on at least one light intensity of the wetted area (14b) that was selected due to its frequency.

15. The method according to claim 14, **characterized in that** a frequency distribution of the light intensities is determined before the liquid is applied to the detection area (2).

16. The method according to claim 15, **characterized in that** a quality control is performed based on the frequency distribution.

17. The method according to claim 16, **characterized in that** a proportion of frequencies that are within a certain intensity interval is determined.

18. The method according to claim 16, **characterized in that** the test element (1) is not used if the proportion of the frequencies within the interval does not exceed an interval threshold value.

19. The system according to claim 1, **characterized in that** the evaluation unit (7) is integrated on a chip.

20. The system according to claim 19, **characterized in that** the detection unit (6) contains a CMOS detector integrated together with at least one analogue-digital converter on the chip.

## Revendications

1. Système de détermination de la concentration d'un analyte dans un échantillon liquide, comprenant
- une unité de détection (6), destinée à la détection d'intensités lumineuses (11), émises par des sections d'une zone de détection (2) d'un élément d'analyse (1), et comprenant également
- une unité d'exploitation (7) capable de recueillir une répartition des fréquences (9) des intensités lumineuses (11) détectées, la répartition des fréquences (9) présentant au moins un premier maximum (13), provenant d'au moins une section non mouillée (14a) ou d'au moins une zone de référence et un second maximum (13a), provenant d'une section mouillée (14b), et qui, en se basant sur les fréquences, est capable d'identifier les sections mouillées (14b) de l'élément d'analyse (1) et de les différencier des sections non mouillées (14a), et, en se basant sur la répartition des fréquences (9), de choisir au moins une intensité lumineuse de la section mouillée et de déterminer la concentration de l'analyte à partir de l'au moins une intensité lumineuse choisie.

2. Système selon la revendication 1, **caractérisé en ce que** la concentration de l'analyte est déterminée en se basant sur les fréquences des intensités, après le dépôt de l'échantillon sur la zone de détection (2), mais également avant et après le dépôt de l'échantillon.

3. Système selon la revendication 1 ou 2, **caractérisé en ce que** l'élément d'analyse (1) contient un réactif qui est réparti de manière essentiellement homogène dans ou sur la zone de détection (2).

4. Système selon la revendication 1, 2 ou 3, **caractérisé en ce que** le volume d'échantillon utilisé se trouve entre 0,1 et 500 nL.

5. Système selon l'une des revendications 1 à 4, **caractérisé en ce que** la concentration de l'analyte est déterminée en se basant sur les vitesses de variation des fréquences des intensités lumineuses (11) émises, après le mouillage de la zone de détection (2).

6. Système selon l'une des revendications 1 à 5, **caractérisé en ce que** la concentration de l'analyte est déterminée en se basant sur les valeurs maximales de la répartition des fréquences des intensités (11), avant et après le mouillage de la zone de détection (2).

7. Système selon l'une des revendications 1 à 6, **caractérisé en ce que** l'exploitation est réalisée à l'aide d'un procédé d'analyse multivariée.

8. Système selon l'une des revendications 1 à 7, **caractérisé en ce que** la détermination de la concentration de l'analyte est obtenue à partir de la pente de la courbe d'intensité entre l'intensité la plus faible et l'intensité la plus fréquente.

9. Système selon l'une des revendications 1 à 8, **caractérisé en ce que** la concentration de l'analyte est déterminée en se basant sur les intensités (11), qui dépassent une valeur seuil de fréquence.

10. Système selon l'une des revendications 1 à 9, **caractérisé en ce qu'un** contrôle qualité est effectué en se basant sur la forme des répartitions des fréquences avant et/ou après le mouillage.

11. Système selon l'une des revendications 1 à 10, **caractérisé en ce qu'un** mouillage suffisant de la zone de détection (2) est constaté lorsqu'une fréquence déterminée des intensités (11), qui varient suite au dépôt de l'échantillon, est dépassée.

12. Système selon la revendication 10, **caractérisé en ce qu'il** est conclu à une homogénéité suffisante de la zone de détection (2) en se basant sur la répartition des fréquences avant le mouillage de la zone de détection (2).

13. Système selon l'une des revendications 1 à 11, **caractérisé en ce qu'une** exploitation de la zone de détection (2) est réalisée lorsque, après le dépôt de l'échantillon sur la zone de détection (2), la vitesse de variation des fréquences se situe en-dessous d'une valeur seuil de vitesse.

14. Procédé de détermination de la concentration d'un analyte dans un liquide, comprenant les étapes consistant à
appliquer un liquide sur une zone de détection (2) d'un élément d'analyse (1),
détecter des intensités lumineuses (11) de la lumière émise par la section,
déterminer une répartition des fréquences (9) des intensités lumineuses (11) détectées, la répartition des fréquences (9) présentant au moins un premier maximum (13), provenant d'au moins une section non mouillée (14a) ou d'au moins une zone de référence et un second maximum (13a), provenant d'une section mouillée (14b),
identifier et différencier les sections mouillées (14b) et les sections non mouillées (14a),
calculer la concentration de l'analyte en se basant sur au moins une intensité lumineuse de la zone mouillée (14b), choisie en se basant sur sa fréquence.

15. Procédé selon la revendication 14, **caractérisé en ce qu'une** répartition des fréquences des intensités lumineuses est déterminée avant l'application du liquide sur la zone de détection (2).

16. Procédé selon la revendication 15, **caractérisé en ce qu'un** contrôle qualité est effectué en se basant sur la répartition des fréquences.

17. Procédé selon la revendication 16, **caractérisé en ce qu'on** détermine une proportion des fréquences qui se situent dans un intervalle d'intensité donné.

18. Procédé selon la revendication 16, **caractérisé en ce que** l'élément d'analyse (1) n'est pas utiliser lorsque la proportion des fréquences dans l'intervalle ne dépasse pas une valeur seuil d'intervalle.

19. Système selon la revendication 1, **caractérisé en ce que** l'unité d'exploitation (7) est intégrée à une puce.

20. Système selon la revendication 19, **caractérisé en ce que** l'unité de détection (6) comprend un détecteur CMOS intégré à la puce conjointement à au moins un transducteur A/N
